# FASCICULE DE BREVET EUROPEEN

(11) **EP 1 073 576 B1**
(45) Date de publication et mention de la délivrance du brevet: **29.10.2003**
(21) Numéro de dépôt: 99916972.5
(22) Date de dépôt: 30.04.1999
(51) Int. Cl.: B62D 1/26

(54) **ENSEMBLE BIDIRECTIONNEL DE GUIDAGE LE LONG D'UN RAIL AUTORISANT UN DEPORT LATERAL POUR UN ESSIEU ROUTIER**
SEITLICHEN VERSATZ ERLAUBENDE, BIDIREKTIONALE LEITSCHIENENFÜHRUNGS- EINRICHTUNG FÜR EINE STRASSENACHSE
TWO-WAY GUIDING ASSEMBLY ALONG A RAIL FOR A ROAD AXLE LATERAL OFFSET

(30) Priorité: 30.04.1998 FR 9805693
(43) Date de publication de la demande: 07.02.2001
(73) Titulaire: LOHR INDUSTRIE, 67980 Hangenbieten (FR)
(72) Inventeur: ANDRE, Jean-Luc, F-67210 Obernai (FR)
(74) Mandataire: Metz, Paul
(86) Numéro de dépôt international: FR9901041
(87) Numéro de publication internationale: WO99056999

(56) Documents cités:
- FR-A- 2 759 340
- US-A- 3 180 280

## Description

L'invention se rapporte à un ensemble bidirectionnel de guidage le long d'un rail pour un essieu d'un véhicule routier, ensemble du type défini dans le préambule de la revendication 1 et connu par exemple de US 3180280A.

Il existe de nombreux dispositifs de guidage pour véhicules routiers le long d'un rail.

On connaît notamment les inventions de la société LOHR INDUSTRIE mettant en oeuvre un bras de guidage avec deux galets inclinés se déplaçant sur un rail de guidage.

Ce bras donne une référence directionnelle à un ensemble de direction automatique.

Le bras de guidage situé à l'avant de l'essieu peut être doublé par un bras à l'arrière de l'essieu.

En cas par exemple de perte d'adhérence des roues de l'essieu routier ou de fort vent latéral engendrant une dérive ou autre cause, il est souhaitable, pour éviter que ne s'exercent de trop importants efforts sur l'ensemble de guidage, d'autoriser sur une plage donnée d'efforts un faible déport latéral du bras arrière.

On connaît à cet effet une autre invention de la société LOHR INDUSTRIE déposée en France sous n° FR 2759340 A concernant un ensemble directionnel à limitation du déport latéral (date de publication: 14.08.98).

Cet ensemble bidirectionnel se compose de deux bras doubles indépendants de guidage, l'un à l'avant, l'autre à l'arrière. Chaque bras porte un galet incliné en prise de roulage sur un rail de guidage dont le bras arrière présente des capacités de débattement.

La capacité de débattement provient des déformations transversales élastiques de la liaison des bras avec le châssis.

Les organes de guidage avant et arrière ne sont pas reliés entre eux par un ensemble mécanique rigide ce qui impose des commandes individuelles de relevage pour chacun des bras et donc une complexité de réalisation et de commande.

L'un des premiers buts de l'invention est de relier rigidement les galets avant et arrière de guidage pour éviter la formation d'un angle entre les bras et le rail de guidage représentant une configuration favorisant le déraillement.

Un autre premier but de l'invention est de proposer un moyen simple et fiable de modification de la configuration qui permette de garder un mode guidé après l'inversion du sens de marche.

Un deuxième but de l'invention est de procurer un ensemble bidirectionnel d'autoguidage permettant de passer facilement d'un mode de guidage automatique le long d'un rail à un mode manuel dans lequel c'est le conducteur qui agit sur la direction du véhicule.

Un troisième but de l'invention est de permettre le relevage en marche par une simple libération du blocage en rapprochement des galets suivie d'un mouvement d'ensemble de levage apporté par des bras de relevage.

Un quatrième but est la fiabilité de la prise des galets directionnels sur le rail de guidage par un verrouillage en position.

Pour atteindre ces buts, l'ensemble de guidage selon l'invention comporte les caractéristiques définies dans la revendication 1.

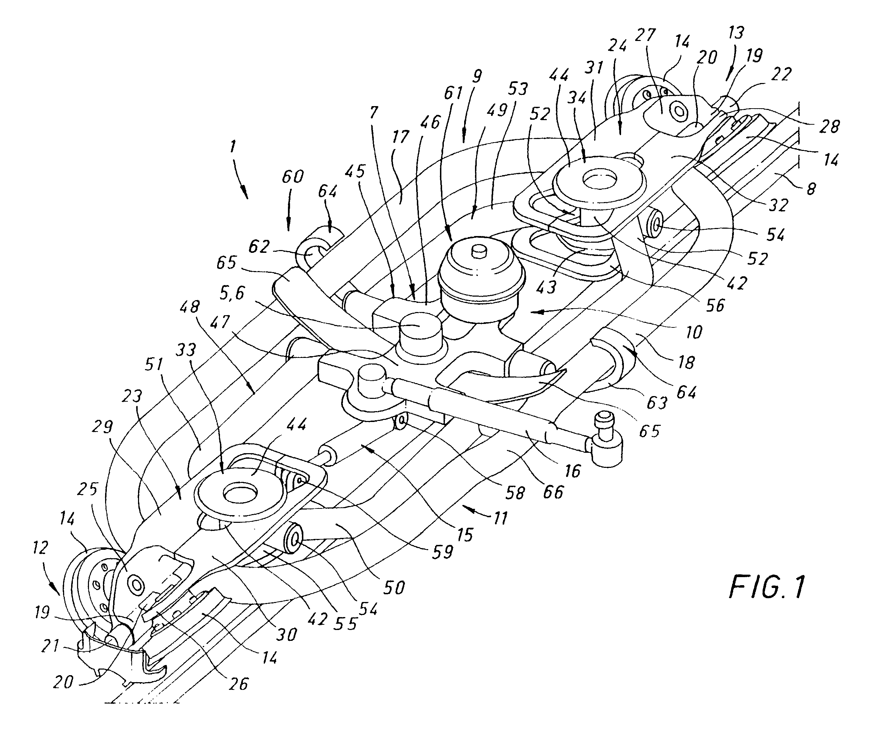

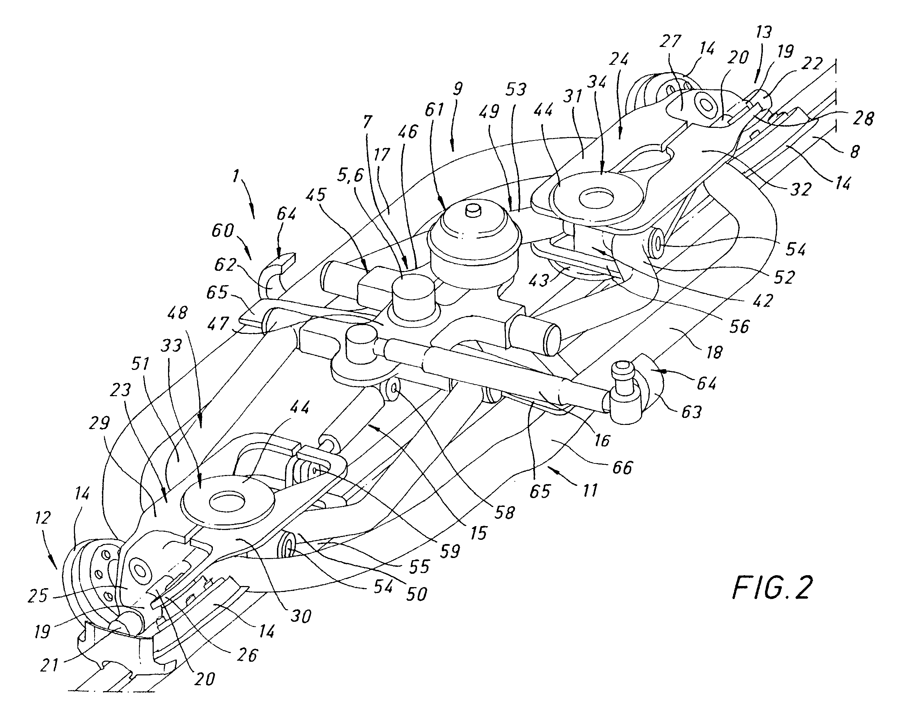

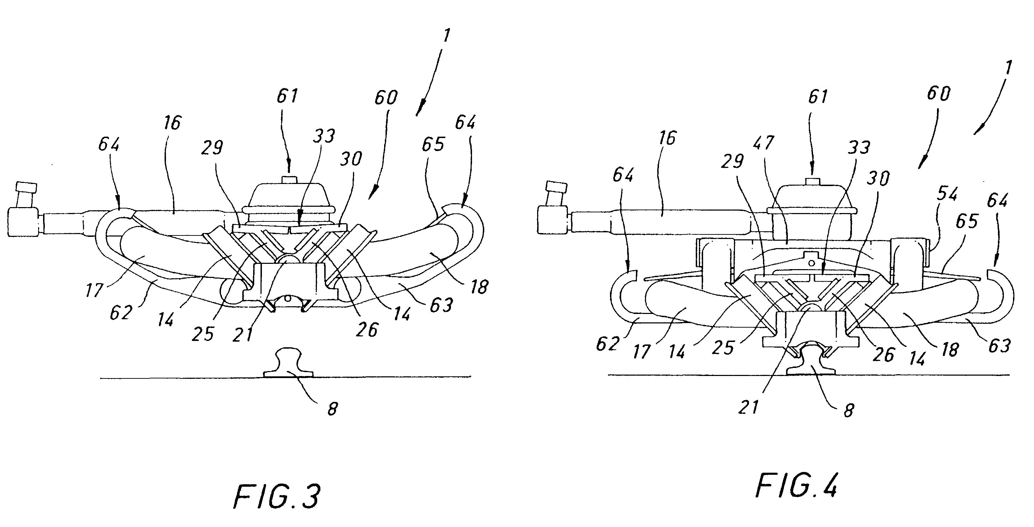

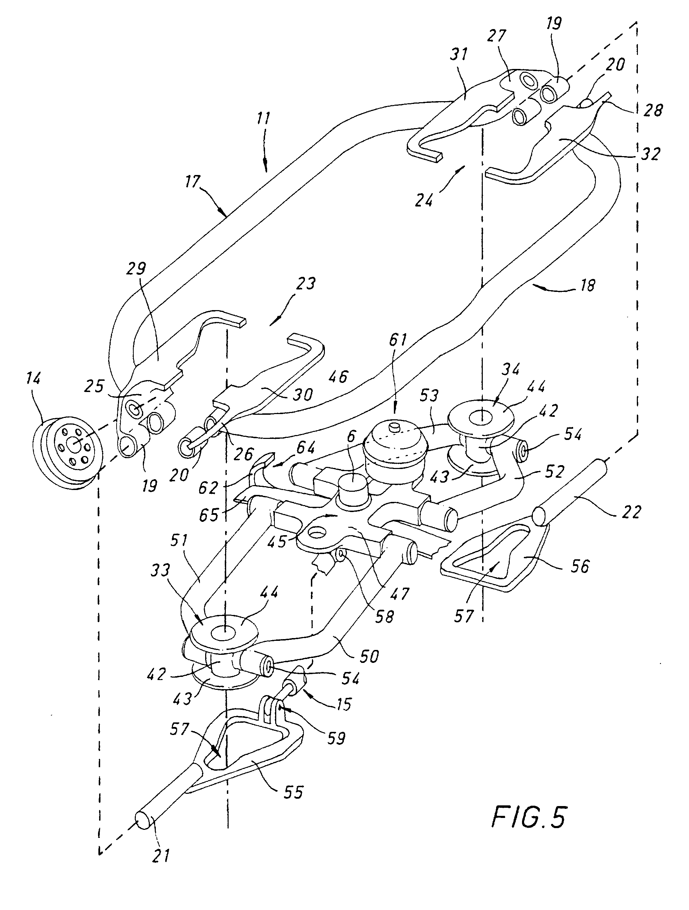

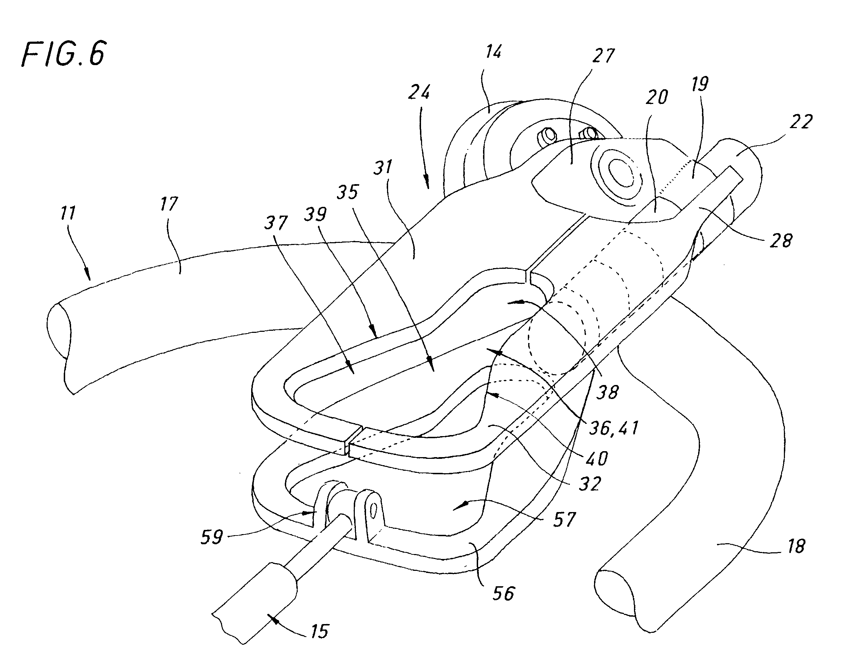

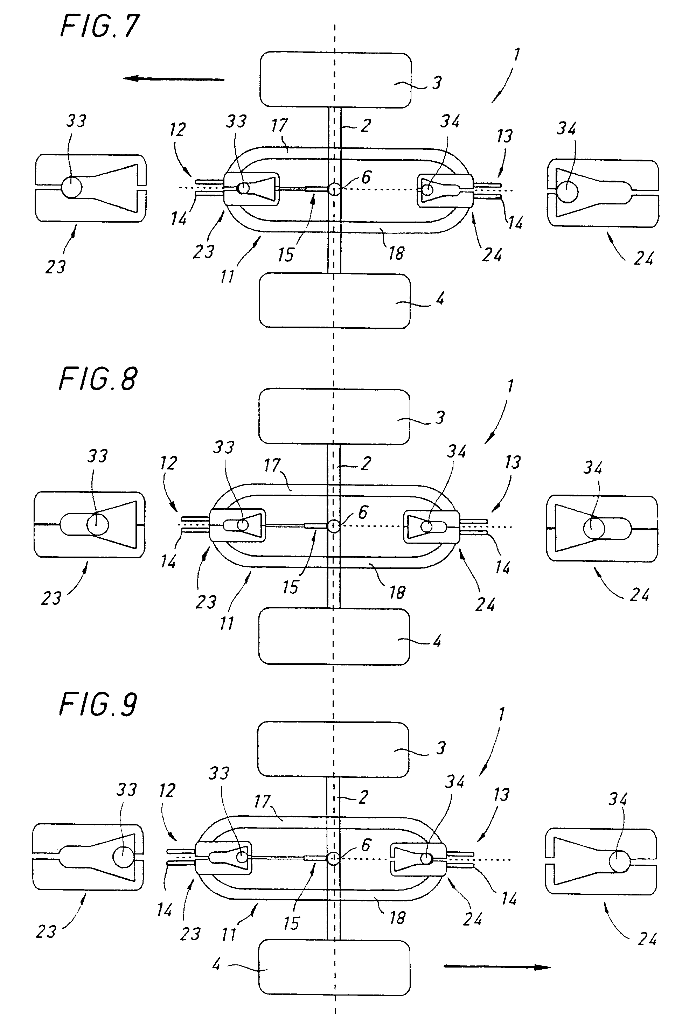

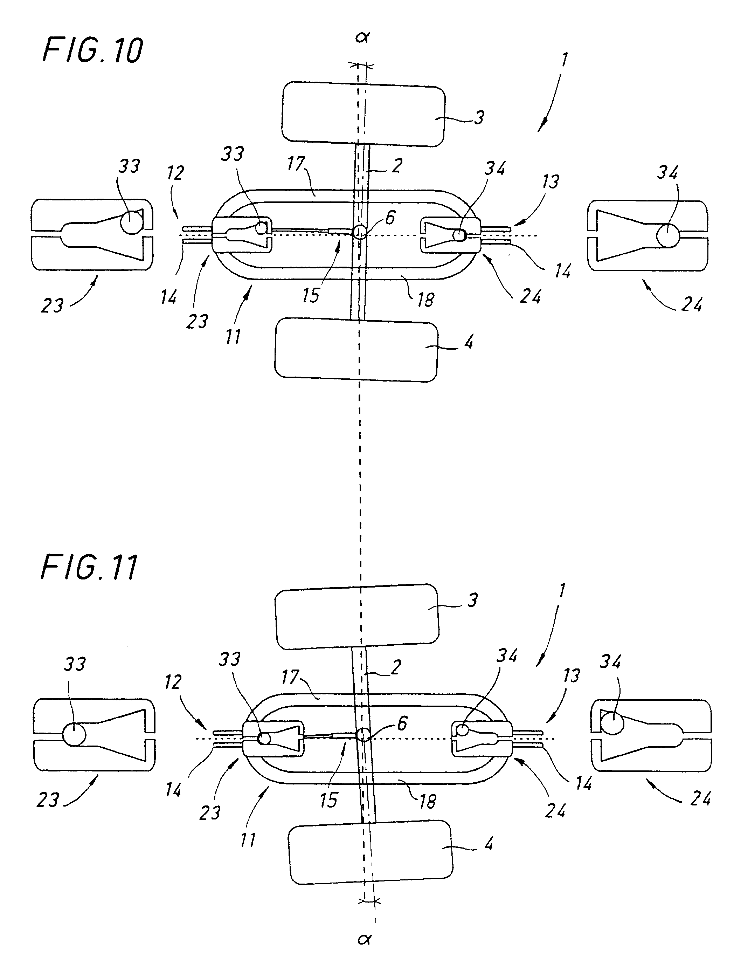

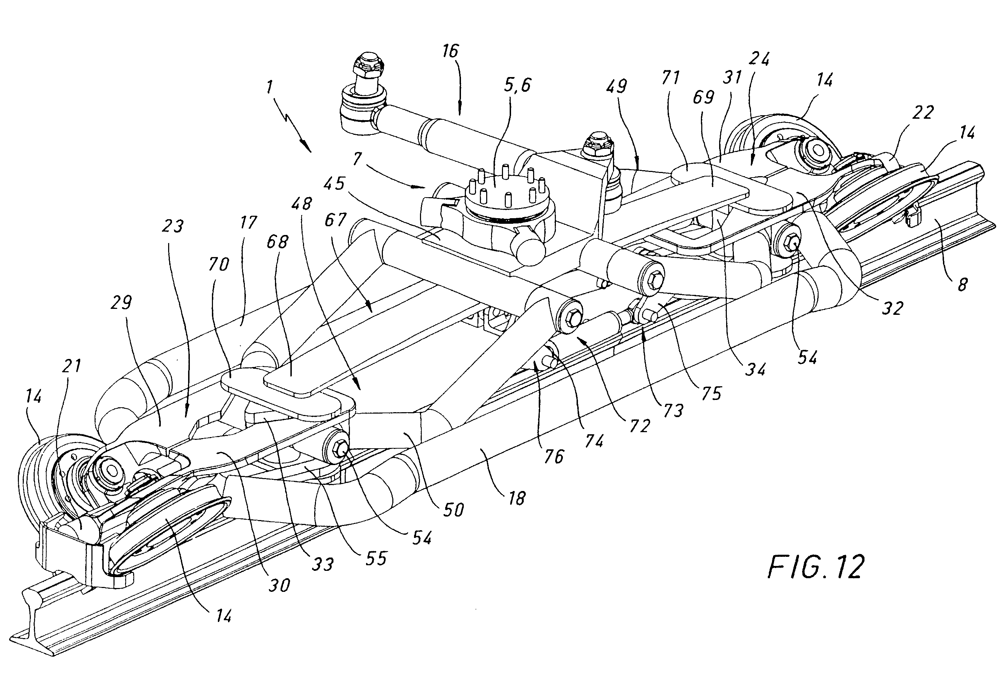

D'autres caractéristiques et avantages de l'invention apparaîtront dans la description qui suit, donnée à titre d'exemple non limitatif en référence au dessin dans lequel :
. les figures 1 et 2 sont des vues générales en perspective montrant l'ensemble bidirectionnel selon l'invention respectivement dans sa position neutre relevée de mode manuel et dans sa position de roulage-guidage ;
. les figures 3 et 4 sont des vues frontales montrant l'ensemble bidirectionnel selon l'invention d'abord à l'état relevé et ensuite à l'état abaissé en prise sur le rail ;
. la figure 5 est une vue en perspective en mode dissocié montrant les diverses pièces composantes de l'ensemble de guidage selon l'invention ;
. la figure 6 est une vue de détail en perspective montrant vue de l'arrière l'extrémité actionnée par le vérin inverseur ;
. les figures 7 à 9 sont des vues schématiques de l'ensemble de guidage vu de dessus montrant les positions des pièces d'écartement dans les trois configurations de base sans déport latéral à savoir déplacement dans un premier sens, position relevée et déplacement dans un deuxième sens ;
. les figures 10 et 11 sont des vues schématiques montrant deux positions de déport latéral dans des sens opposés ;
. la figure 12 est une vue en perspective d'ensemble montrant une variante à lame longitudinale d'appui.

L'ensemble bidirectionnel 1 de guidage selon l'invention est monté solidaire d'un essieu routier 2 à roues 3 et 4 par l'intermédiaire d'une articulation 5 représentée schématiquement par un plot central 6 de liaison entre l'essieu routier 2 et un bloc central d'essieu 7. Cette articulation, par exemple du type à rotule, ne transmet les mouvements directionnels que dans le cas d'un essieu routier directionnel.

Cet ensemble bidirectionnel est destiné à guider l'essieu routier 2 ou à actionner les roues directionnelles à partir d'un guidage le long d'un rail de guidage 8 tout en autorisant une latitude de débattements latéraux appelée déport latéral de l'essieu routier quel que soit le sens de marche.

On peut diviser fonctionnellement cet ensemble en deux sous-ensembles essentiels, un sous-ensemble de guidage 9 et un sous-ensemble guidé 10. Le premier sous-ensemble 9 est déplaçable longitudinalement par rapport à l'essieu 2.

Une liaison double d'interface relie de façon déplaçable longitudinalement au véhicule chacune des extrémités du cadre-châssis 11 au sous-ensemble guidé 10.

Le sous-ensemble de guidage 9 se compose d'un cadre-châssis 11 autoporteur en position de roulage sur le rail de guidage 8 et porté par l'essieu routier 2 lorsqu'il se trouve en position relevée, c'est-à-dire en configuration de guidage manuel par le conducteur du véhicule.

Le cadre-châssis 11 comporte à chacune de ses extrémités un couple avant 12 et arrière 13 de galets de guidage tels que 14 inclinés en V à pointe dirigée vers le bas en prise sur le rail de guidage 8, par l'intermédiaire desquels il est porté et roule sur et le long de ce rail de guidage.

La liaison double d'interface relie chacune des extrémités du cadre-châssis 11 à chacune des extrémités de l'ensemble guidé 10 par une articulation composite à partie mobile permettant pour chacune d'entre elles par un déplacement longitudinal au véhicule du cadre-châssis 11 par rapport à l'essieu routier 2 d'être alternativement dans un état d'axe-pivot ou dans un état de débattement angulaire transversal pour l'autoguidage en passant par un état inopérant en autoguidage correspondant à la position centrale.

Comme indiqué le sous-ensemble de guidage 9 peut se déplacer par rapport à l'essieu routier 2 en translation longitudinale sensiblement dans l'axe du véhicule sous l'effet d'un vérin d'inversion 15 entre une position extrême dans un sens longitudinal de marche par rapport au rail et une position extrême opposée dans l'autre sens longitudinal de marche du véhicule. Cette inversion de positions extrêmes correspond à une inversion du sens de marche du véhicule en mode guidé par l'intermédiaire d'une bielle 16 de direction.

Le changement s'effectue par passage dans une position centrale neutre correspondant à un état qui permet de relever le cadre-châssis 11, état dans lequel les galets de guidage ne sont plus assujettis au rail de guidage 8. L'ensemble bidirectionnel devient inactif et le guidage de l'essieu routier 2 s'effectue alors manuellement par le conducteur à travers la direction du véhicule actionnant une commande appropriée reliée au bloc central d'essieu 7 ou directement à l'essieu 2 ou aux roues directrices en vue de la modification d'orientation directionnelle.

Après ces considérations générales, on examinera ci-après en détail les différentes parties et éléments composant l'ensemble bidirectionnel selon l'invention.

Le cadre-châssis 11 est formé de deux demi-parties longitudinales ou branches 17 et 18 montées pivotantes entre elles à chacune de leur extrémité autour d'un axe longitudinal parallèle à l'axe longitudinal du véhicule.

Il peut s'agir, comme pour la variante d'exécution représentée sur les figures, de deux branches 17 et 18 tubulaires à corps droit et à extrémités incurvées se rejoignant selon des conformations d'extrémité en charnière 19 et 20 qui s'imbriquent l'une dans l'autre pour former un logement cylindrique continu occupé par une pièce d'axe de pivotement d'extrémité 21 ou 22 réalisant l'assemblage à pivotement des charnières entre elles. En raison de la symétrie gauche droite, les axes de pivotement d'extrémité 21 et 22 sont alignés.

Les extrémités en charnière 19 et 20 des branches pivotantes 17 et 18 du cadre 11 se poursuivent chacune vers le haut par des platines-supports 23 et 24 de forme complexe remplissant plusieurs fonctions.

Ces platines-supports 23 et 24 présentent une partie inférieure montante servant de support individuel porte-galet 25, 26 et 27, 28 sur chacun desquels est monté un galet de guidage tel que 14 par l'intermédiaire d'une liaison de roulement présentant les jeux fonctionnels nécessaires.

Les inclinaisons de deux supports porte-galet en regard sont celles des galets à la précision de montage et aux déformations élastiques près.

Les supports porte-galet 25 à 28 se prolongent vers le haut en s'incurvant à l'horizontale pour donner naissance à des demi-platines 29 à 32 à extrémités en crochet destinées à se rapprocher latéralement pour constituer à chaque fois une platine-support 23 ou 24 servant au guidage et au soutien de pièces mobiles d'écartement 33 et 34 en position relevée du cadre ainsi qu'au débattement latéral de celles-ci. Chaque pièce mobile d'écartement 33 ou 34 assure une fonction d'écarteur et d'autres fonctions à savoir d'une part une fonction d'axe-pivot entre le cadre-châssis 11 et le sous-ensemble guidé 10 pour la pièce mobile d'écartement située à l'avant et une fonction de butée de débattement pour la pièce mobile d'écartement située à l'arrière et d'autre part une fonction de butée en pivotement pour les branches 17 et 18 du cadre 11.

Chacune des liaisons d'interface est une articulation regroupant une pièce d'extrémité 33 ou 34 du sous-ensemble guidé 9 et un support mobile longitudinalement au véhicule constituant la partie supérieure de chacune des extrémités du sous-ensemble de guidage 9.

Les platines-supports 23 et 24 définissent un support à deux plans inclinables par le mouvement de pivotement des branches du cadre-châssis 11. Elles sont constituées chacune par la présentation côte à côte de deux demi-platines 29, 30 et 31, 32 à extrémité en crochet venant se placer côte à côte et pouvant s'incliner en rapprochement-éloignement l'une par rapport à l'autre lors du mouvement de pivotement vers le bas ou vers le haut des branches du cadre-châssis (11) permettant de déplacer les galets l'un par rapport à l'autre.

Les deux demi-platines 29, 30 et 31, 32 délimitent une lumière centrale 35 de profil en forme de poire à étranglement médian 36 séparant une grande ouverture de débattement 37 dirigée vers la partie centrale du cadre-châssis 11 et une petite ouverture de guidage 38 dirigée chacune vers une des extrémités de ce cadre-châssis 11. Les platines-supports 23 ou 24 sont traversées chacune par une des pièces mobiles d'écartement 33 ou 34 se déplaçant dans l'axe longitudinal de l'ensemble directionnel le long de la lumière centrale 35 à étranglement 36.

La grande ouverture 37 présente des bords convergents 39 et 40. Ces bords convergent vers une zone médiane de rétrécissement 41 correspondant à l'étranglement 36 située au niveau de l'entrée dans la petite ouverture 38 (figure 6).

Chaque lumière centrale 35 se déplace de façon guidée par une pièce mobile d'écartement et ses bords soutiennent la pièce mobile d'écartement 33 ou 34 correspondante au niveau de sa partie supérieure.

Chacune des extrémités des branches 17 et 18 du cadre-châssis 11 forme une pièce unique monobloc regroupant les trois fonctions de porte-galet, d'articulation de pivotement des branches 17 et 18 entre elles et de support mobile de guidage-coulissement de chaque pièce d'extrémité du sous-ensemble guidé 10.

De façon préférentielle, les pièces d'écartement 33 ou 34 sont conformées en axes-bobines à partie cylindrique centrale 42 constituant l'axe et à deux flasques d'extrémité 43 et 44.

Les platines-supports 23 et 24 ainsi que les éléments fonctionnels s'y rapportant sont disposés à l'intérieur du cadre-châssis 11.

L'invention concerne également une réalisation dans laquelle les groupes fonctionnels des platines-supports 23 et 24 et des galets associés 14 sont disposés en configuration inverse c'est-à-dire à l'extérieur du cadre-châssis 11 pour les platines-supports 23 et 24 et à l'intérieur du cadre-châssis 11 pour les galets 14.

Chacune des pièces d'écartement 33 et 34 peut occuper trois positions caractéristiques, à savoir une position de fonction directionnelle d'autoguidage dans la petite ouverture 38, une position de débattement latéral limité dans la grande ouverture 37 et une position intermédiaire neutre à l'entrée de l'étranglement 36, cette dernière correspondant à une configuration de relevage du cadre, c'est-à-dire à un état inopérant lorsqu'elle se trouve en position intermédiaire entre les deux ouvertures dans l'étranglement 36.

La largeur de la petite ouverture 38 à l'état jointif des demi-platines de support doit être inférieure au diamètre de l'axe cylindrique 42 des pièces d'écartement 33 ou 34 de manière à contraindre légèrement les galets 14 en rapprochement après le franchissement de l'étranglement 36, c'est-à-dire de leur imposer une contrainte l'un vers l'autre lorsque ceux-ci sont en prise sur le rail de guidage 8.

Le sous-ensemble guidé 10 ou mécanisme central se compose d'un croisillon d'essieu 45 solidaire en pivotement de l'essieu routier 2 par le plot central 6 de liaison. En mode manuel, lorsque le cadre-châssis 11 se trouve en position relevée inopérante, ce croisillon 45 peut être immobile et les roues directrices sont actionnées en orientation par une autre commande qui prend le relais et en option la bielle 16 n'est plus soumise aux mouvements de pivotement provenant de l'ensemble bidirectionnel d'autoguidage.

Le croisillon d'essieu 45 présente une conformation en double croix à deux structures transversales 46 et 47 sur chacune desquelles est monté un bras pivotant de liaison 48 et 49.

L'ensemble des deux bras pivotants 48 et 49 de liaison constitue la liaison articulée entre le sous-ensemble guidé 10 et le sous-ensemble déplaçable de guidage 9.

Les bras pivotants de liaison 48 et 49 sont constitués chacun de deux branches 50,51 et 52,53 coudées en extrémité et réunies entre elles par leurs extrémités coudées situées au delà du croisillon 45 par un axe transversal de pivotement 54 solidarisé aux corps des pièces d'écartement 33 ou 34. Les extrémités opposées des branches des bras pivotants 48 et 49 sont montées pivotantes sur les extrémités des structures transversales 46 et 47 constituant le croisillon central 45.

Les pièces d'écartement 33 et 34 sont formées par l'axe tubulaire 42 terminé par les deux flasques d'extrémité 43 et 44 par lesquels elles reposent sur les platines-supports 23 et 24. Il apparaît évident que le diamètre des flasques d'extrémité 43 et 44 est supérieur à la largeur de la grande ouverture 37 des platines-supports 23 et 24.

Ces platines-supports 23 et 24 sont doublées en partie inférieure par des platines-tiroirs 55 et 56 plates et réalisées d'une seule pièce. De forme générale triangulaire elles présentent chacune une ouverture centrale 57 en forme de poire ou analogue à celle des platines-supports 23 et 24. Ces platines-tiroirs 55 et 56 ne sont pas scindables et se prolongent chacune à leur sommet par une pièce d'axe pleine ou tubulaire formant chacune l'un des axes d'extrémité 21 et 22.

Les platines-supports et les platines-tiroirs se déplacent à guidage le long des pièces d'écartement 33 et 34 lors des mouvements de déplacement en translation du cadre-châssis 11.

Les mouvements proviennent de l'action motrice du vérin inverseur 15 à double effet monté articulé entre d'une part la sous-face d'une extrémité longitudinale du croisillon 45, par exemple celui recevant la bielle de direction 16 par une articulation de pivotement 58, et d'autre part une des platines-tiroirs 55 ou 56 par un axe de pivotement 59 monté entre deux chapes.

L'ensemble bidirectionnel selon l'invention est complété par un mécanisme de relevage 60, se composant par exemple d'un moyen moteur 61 pneumatique ou hydraulique à bielle articulée actionnant en pivotement de relevage ou d'abaissement deux bras de relevage 62 et 63 à extrémité en crochet 64. Ces bras de relevage 62 et 63 sont articulés à pivotement sur le croisillon 45 du bloc central d'essieu 7. Ils viennent en contact par leurs extrémités en crochet 64 avec les branches 17 et 18 du cadre-châssis 11 qu'ils font pivoter légèrement vers le haut lors de la première phase de relevage jusqu'à butée bord-à-bord des demi-parties des pièces supérieures de support 23 et 24 dégageant ainsi les galets de guidage 14 pour terminer dans un mouvement de relevage d'ensemble jusqu'à libération des galets 14 du rail de guidage 8 comme on le verra en détail ci-après.

Les crochets d'extrémité 64 du mécanisme de relevage 60 n'enserrent pas les branches du cadre-châssis 11. Ils constituent simplement une deuxième butée latérale qui apporte une sécurité complémentaire de limitation du débattement latéral de l'essieu 2 en cas de perte d'adhérence.

L'ensemble bidirectionnel comporte aussi une lame transversale flexible 65, de préférence à effet de ressort, apportant par un appui élastique permanent vers le bas une charge sur les galets sur le rail de guidage et accessoirement un effort élastique supplémentaire en rapprochement des galets de guidage 14 en vue de leur emprise sur le rail 8, procurant ainsi une sécurité de rappel élastique en pivotement vers le bas.

On a ménagé dans la branche 18 située du côté de la bielle de commande de direction 16 ou conformé dans cette branche une déformation 66 vers le bas formant un retrait destiné à éviter toute interférence préjudiciable du cadre-châssis 11 avec cette bielle de commande directionnelle.

La figure 12 représente une variante à relevage sans libération de la prise des galets sur le rail de guidage. La précontrainte constante vers le bas prend la forme d'un appui localisé permanent sur la partie supérieure de chacune des pièces d'écartement 33 ou 34. Cette précontrainte élastique provient d'une force élastique procurée dans la variante représentée par les extrémités d'une lame longitudinale fixe 67 à effet de ressort. Celle-ci appuie par chacune de ses extrémités 68 ou 69 sur le flasque supérieur 70 ou 71 respectivement de chacune des pièces d'écartement 33 ou 34. Le plan supérieur formé par les deux demi-platines 29,30 et 31,32 disposées côte à côte coulisse sous ces flasques lors du déplacement longitudinal du cadre-châssis 11 au moment de l'inversion du sens de marche sous l'action du vérin inverseur.

Cette variante se distingue également par un autre mécanisme de relevage. En se référant à la figure 12, on remarque que le mécanisme de relevage utilise les bras pivotants de liaison 48 et 49 du sous-ensemble guidé 10. Le moyen moteur est un vérin écarteur 72 monté parallèle au rail de guidage 8 entre deux branches homologues des deux bras pivotants de liaison. Le vérin d'écartement 72 comporte une tige 73 et un corps 74. L'extrémité libre de la tige 73 est montée articulée sur une chape 75 et le corps 74 sur une autre chape 76 solidaires de la branche adjacente du bras pivotant respectif 49 et 48. Le vérin peut comporter deux tiges. Dans ce cas, la deuxième tige est montée sur la chape correspondante.

Lors du relevage, ce vérin travaille en écartement des deux bras pivotants de liaison qui, sous cette force de poussée, sont contraints en pivotement vers le haut et se soulèvent à l'encontre de la force élastique d'appui vers le bas procurée par la lame longitudinale d'appui 67. En raison de l'appui élastique constant sur les demi-platines disposées côte à côte 29 à 32 des extrémités de la lame longitudinale 67 à travers les flasques 70 et 71, le mouvement de relevage n'engendre pas forcément un écartement préalable des galets même s'ils ne sont pas verrouillés en rapprochement.

L'invention se rapporte également à une variante simplifiée (non représentée) dans laquelle le cadre-châssis 11 n'est plus formé par deux branches 17 et 18 pivotantes entre elles, mais par un cadre ou un périmètre rigide.

Comme précédemment, dans cette variante les galets de guidage sont chargés verticalement sur le rail de guidage par l'intermédiaire d'une force élastique quelconque provenant d'un ou de plusieurs appui(s) vers le bas en vue d'améliorer le guidage. Il est évident que dans cette réalisation, il n'est pas possible de dégager les galets lors du relevage. Il faut donc sortir les galets de guidage hors du rail en fin de zone de guidage.

On distingue trois modes de fonctionnement :
. le fonctionnement en mode manuel dans lequel le cadre 11 est relevé,
. le fonctionnement en mode autoguidé dans un sens avec limitation du déport latéral,
. le fonctionnement en mode autoguidé dans l'autre sens avec limitation du déport latéral.

On passe d'un mode autoguidé dans l'autre par l'action du vérin d'inversion 15 à l'arrêt du véhicule.

Dans le mode autoguidé, la pièce d'écartement avant par exemple 33 se trouve dans la petite ouverture 38 de la platine-support par exemple 23 située du côté avant alors que la pièce d'écartement arrière 34 occupe une position centrale dans la grande ouverture 37 de la platine-support arrière 24 afin de permettre un certain débattement latéral angulaire de l'essieu 2.

On passe d'un mode guidé asservi au rail selon un sens de marche (figure 7) dans l'autre mode guidé selon l'autre sens de marche (figure 9) par une action sur le vérin 15. Celui-ci agit sur la platine-tiroir 55 en regard et pousse ou tire le cadre 11 avec ses platines-supports 23 et 24 par rapport à l'essieu 2 pour inverser les positions des pièces d'écartement 33 et 34 par rapport aux lumières correspondantes.

La pièce d'écartement 33 ou 34 occupant la petite ouverture 38 de la platine-support 23 ou 24 est toujours la pièce d'écartement avant dans le sens de la marche. Elle sert de centre de pivotement pour l'autoguidage. Dans cette position, la pièce d'écartement avant, par sa présence, empêche les galets 14 de sortir du rail 8 en maintenant ceux-ci en rapprochement par l'écartement des demi-platines adjacentes.

Les figures 10 et 11 illustrent le débattement latéral de l'essieu routier 2 autorisant une déviation angulaire " α " par rapport à la direction transversale au véhicule.

On passe dans le mode guidé manuel (figure 8) en amenant d'abord par le vérin d'inversion 15 le cadre 11 dans une position médiane correspondant pour les deux parties tubulaires 42 à une position d'échappement de la zone de rétrécissement 41 de la lumière centrale 35. Les galets sont alors libres de pivoter l'un par rapport à l'autre.

On procède ensuite au relevage. Conformément à la variante représentée sur les premières figures, le mouvement de relevage se réalise par l'intermédiaire du moyen moteur 61 agissant sur la bielle du mécanisme de relevage 60. La traction sur l'extrémité des bras de relevage 62 et 63 fait pivoter vers le haut et ainsi remonter les deux branches 17 et 18 du cadre-châssis 11, par exemple jusqu'à jonction des deux demi-platines de chaque platine-support 23 ou 24 (figures 3 et 4).

Le cadre-châssis 11 se soulève et les galets 14 s'échappent du rail 8 et montent en même temps que les pivots et les éléments mécaniquement associés dont les bras pivotants de liaison 48 et 49 jusqu'à une position haute dans laquelle les extrémités des bras de relevage 62 et 63 forcent les branches 17 et 18 du cadre 11 contre la lame transversale flexible 65. Cette dernière provoque un rappel élastique vers le bas réalisant ainsi un véritable effet d'enserrement-immobilisation contre les extrémités en crochet 64 des bras de levage 62 et 63.

Au cours de ce mouvement, les bras pivotants 48 et 49 de liaison du sous-ensemble guidé 10 pivotent vers le haut car les premières extrémités de ceux-ci sont entraînées dans un mouvement ascendant par les pièces d'écartement 33 et 34, elles-mêmes soulevées par le cadre-châssis 11.

Dans la variante de la figure 12, le relevage s'effectue par l'intermédiaire du vérin horizontal d'écartement 72. Sur commande, ce vérin écarte en pivotement les bras pivotants de liaison du sous-ensemble guidé provoquant ainsi la libération des galets du rail de guidage.

On procède aux opérations inverses pour repasser en mode autoguidé.

Les galets sont remis en configuration d'enserrement du rail avec ou sans écartement préalable selon la variante.

Cependant dans la variante simplifiée non représentée à cadre-châssis rigide, il s'avère nécessaire d'engager les galets par le passage dans une zone d'entrée de guidage.

## Revendications

1. Ensemble bidirectionnel de guidage le long d'un rail de guidage (8) avec limitation du déport latéral pour un essieu routier (2) comprenant deux couples de deux galets de guidage (14) inclinés en V placés de part et d'autre de l'essieu routier (2) et assujettis le long du même rail de guidage (8) **caractérisé en ce qu'**il se compose des modules fonctionnels suivants :
. un sous-ensemble guidé (10) formé d'un bloc central (7) d'essieu monté sur l'essieu routier (2) et orientant cet essieu routier (2) ou les roues directrices de celui-ci en guidage autodirectionnel à partir du rail de guidage (8) et qui peut débattre transversalement à l'arrière autour d'un point de pivotement situé au voisinage des galets avant,
. un sous-ensemble de guidage (9) formé d'une structure en cadre-châssis (11) comprenant deux extrémités opposées s'étendant de part et d'autre de l'essieu et équipées chacune d'un couple de galets de guidage (14) en prise sur le rail de guidage (8), le sous-ensemble de guidage (9) étant déplaçable longitudinalement par rapport à l'ensemble guidé (10) entre deux positions extrêmes situées de part et d'autre de l'essieu routier (2),
. une liaison double d'interface reliant de façon articulée et déplaçable longitudinalement par rapport au véhicule chacune des extrémités du cadre-châssis (11) à chacune des extrémités du sous-ensemble guidé (10) à chaque fois par une articulation composite, permettant suite à un déplacement du cadre-châssis (11) longitudinalement au véhicule c'est-à-dire transversalement à l'essieu routier (2) d'être alternativement une liaison articulée de pivotement ou une articulation de débattement angulaire transversal pour assurer l'autoguidage,
et **en ce que** le déplacement du sous ensemble de guidage (9) permet le passage de l'ensemble bidirectionnel d'une première position en mode autoguidé avec débattement latéral de l'essieu routier (2) selon un sens de marche du véhicule dans une deuxième position en mode autoguidé avec débattement latéral de l'essieu routier (2) selon le sens opposé de marche du véhicule en passant par une position centrale.

2. Ensemble bidirectionnel de guidage selon la revendication 1 **caractérisé en ce que** la position centrale par laquelle passe le sous ensemble de guidage (9) est une position neutre dans laquelle les galets de guidage (14) sont dégagés de leur emprise sur le rail de guidage (8), cette position neutre permettant le relevage de l'ensemble bidirectionnel et le guidage en mode manuel.

3. Ensemble bidirectionnel de guidage selon la revendication 1 **caractérisé en ce que** le cadre-châssis (11) est formé de deux branches (17, 18) articulées entre elles à pivotement par leurs extrémités autour d'un axe parallèle à l'axe longitudinal du véhicule.

4. Ensemble bidirectionnel de guidage selon la revendication 1 ou 2 **caractérisé par** un état intermédiaire inopérant pour l'autoguidage correspondant à la position centrale.

5. Ensemble bidirectionnel de guidage selon la revendication précédente **caractérisé en ce que** les parties de liaison reliant le bloc central (7) d'essieu à chacune des extrémités du cadre-châssis (11) sont des bras pivotants (48, 49) dont les branches sont articulées à pivotement d'une part autour des extrémités des structures transversales du bloc central (7) d'essieu et d'autre part autour d'un axe transversal à une pièce mobile d'écartement de l'ensemble guidé (10).

6. Ensemble bidirectionnel de guidage selon la revendication 4 ou 5 **caractérisé en ce que** chacune des liaisons d'interface est une articulation regroupant une pièce mobile d'écartement (33, 34) du sous-ensemble guidé (9) et un support mobile longitudinalement au véhicule constituant la partie supérieure de chacune des extrémités du sous-ensemble de guidage (9).

7. Ensemble bidirectionnel de guidage selon la revendication précédente **caractérisé en ce que** chacune des extrémités des branches (17, 18) du cadre-châssis (11) forme une pièce unique monobloc regroupant les trois fonctions de porte-galet, d'articulation de pivotement des branches (17, 18) entre elles et de support mobile de guidage-coulissement de chaque pièce mobile d'écartement du sous-ensemble guidé (10).

8. Ensemble bidirectionnel de guidage selon la revendication 3 ou 4 **caractérisé en ce que** les extrémités inférieures de chaque branche (17, 18) du cadre-châssis (11) sont conformées en structure de charnière (19, 20), les structures de charnière de deux extrémités en regard venant s'imbriquer l'une dans l'autre pour former un logement d'axe de pivotement des branches entre elles.

9. Ensemble bidirectionnel de guidage selon les revendications 7 et 8 **caractérisé en ce que** la structure de charnière (19, 20) de chaque extrémité de chaque branche se prolonge vers le haut par un support porte-galet, les deux supports en regard étant inclinés de façon à former un V à pointe dirigée vers le bas.

10. Ensemble bidirectionnel de guidage selon les revendications 6 à 8 **caractérisé en ce que** les supports des parties supérieures des extrémités de chaque branche sont des demi-platines (29 à 32) à extrémité en crochet venant se placer côte à côte et pouvant s'incliner en rapprochement-éloignement l'une par rapport à l'autre lors du mouvement de pivotement vers le bas ou vers le haut des branches du cadre-châssis (11) permettant de déplacer les galets l'un par rapport à l'autre.

11. Ensemble bidirectionnel de guidage selon la revendication précédente **caractérisé en ce que** deux demi-platines homologues à extrémité en crochet forment après leur rapprochement latéral des platines-support (23, 24) remplissant chacune la fonction de support mobile longitudinalement pour la pièce correspondante d'extrémité du sous-ensemble guidé (10).

12. Ensemble bidirectionnel de guidage selon la revendication 11 **caractérisé en ce que** les platines-supports (23, 24) constituent par la disposition côte à côte de leurs demi-platines respectives (29 à 32) un support mobile à lumière centrale à profil en forme de poire formée de la succession d'une grande et d'une petite ouverture séparées par une zone d'entrée vers laquelle convergent les bords de la grande ouverture.

13. Ensemble bidirectionnel de guidage selon la revendication 6 ou 11 ou 12 **caractérisé en ce que** chaque pièce mobile d'écartement (33, 34) du sous-ensemble guidé (10) est formée d'une partie centrale cylindrique (42) terminée par deux flasques d'extrémité (43, 44) et joue le rôle d'écarteur des deux demi-platines (29 à 32) ainsi que celui d'axe-pivot pour le guidage autodirectionnel lorsqu'elles sont dans la petite ouverture de la lumière et celui de permettre le débattement latéral lorsqu'elles sont dans la grande ouverture et **en ce que** le diamètre extérieur de la partie centrale cylindrique (42) des pièces mobiles d'écartement ou écarteurs est supérieur à la largeur de la petite ouverture.

14. Ensemble bidirectionnel de guidage selon la revendication 1 **caractérisé en ce que** le bloc central d'essieu (7) est un croisillon double (45) présentant deux structures transversales séparées par un plot central (6) assurant l'interface avec l'essieu routier (2) et une bielle (16) de direction d'autoguidage.

15. Ensemble bidirectionnel de guidage selon la revendication 1 **caractérisé en ce que** le sous-ensemble de guidage (9) est relevable.

16. Ensemble bidirectionnel de guidage selon la revendication précédente **caractérisé en ce que** le sous-ensemble de guidage (9) est relevable par un mécanisme de relevage solidaire du bloc central (7) d'essieu comportant un ensemble à deux bras pivotants de relevage actionnés par un moyen moteur central.

17. Ensemble bidirectionnel de guidage selon la revendication 1 **caractérisé en ce qu'**une force élastique assure une charge permanente vers le bas sur les galets de guidage.

18. Ensemble bidirectionnel de guidage selon la revendication précédente **caractérisé en ce que** le moyen procurant la force élastique de rappel vers le bas est une lame transversale flexible (65) dont les extrémités portent sur les branches (17, 18) du cadre-châssis (11).

19. Ensemble bidirectionnel de guidage selon la revendication 17 **caractérisé en ce que** le moyen procurant la force élastique de rappel est une lame longitudinale flexible (67) appuyant par ses extrémités (68, 69) sur les flasques supérieurs des pièces d'écartement (33, 34).

20. Ensemble bidirectionnel de guidage selon la revendication 1 ou 3 **caractérisé en ce que** le cadre-châssis est un cadre rigide à branches (17, 18) fixes.

## Patentansprüche

1. Bidirektionale Führungsanordnung mit Begrenzung des seitlichen Versatzes zum Führen einer Straßenachse (2) entlang einer Führungsschiene (8) aufweisend zwei Paare von Führungsrollen (14), die V-förmig geneigt beiderseits der Straßenachse (2) angeordnet und entlang derselben Führungsschiene (8) zwangsgeführt sind, **dadurch gekennzeichnet, dass** sie sich aus den folgenden Funktionsbaugruppen zusammensetzt:
- einer geführten Unteranordnung (10), aus einem zentralen Achsblock (7) gebildet ist, der auf der Straßenachse (2) angeordnet ist und die Straßenachse (2) oder die Leiträder derselben bei selbstlenkender Führung in Abhängigkeit von der Führungsschiene (8) ausrichtet und der im hinteren Bereich um einen Schwenkpunkt seitlich ausschwenken kann, der benachbart den vorderen Rollen angeordnet ist,
- einer Führungs-Unteranordnung (9), die aus einer Rahmen-Chassis-Struktur (11) gebildet ist, die zwei einander gegenüberliegende Enden aufweist, die sich jeweils auf einer Seite der Achse erstrecken und jeweils mit einem Paar Führungsrollen (14) ausgestattet sind, die auf der Führungsschiene gehalten sind, wobei die Führungs-Unteranordnung (9) in Längsrichtung bezüglich der geführten Anordnung (10) zwischen zwei Extremstellungen verschiebbar ist, die beidseitig der Straßenachse (2) angeordnet sind,
- einer doppelten Schnittstellen-Verbindung, die in gelenkiger und in Richtung der Fahrzeuglängsachse verschiebbarer Weise jedes der Enden des Rahmen-Chassis (11) mit jedem der Enden der geführten Unteranordnung (10) über jeweils ein zusammengesetztes Gelenk verbindet, wobei es sich in Folge einer Verschiebung des Rahmen-Chassis (11) in Längsrichtung des Fahrzeugs, d.h. quer zur Straßenachse (2) zum Gewährleisten der Selbstführung alternativ entweder um eine gelenkige Schwenkverbindung oder um ein Gelenk für seitlichen Winkelversatz handeln kann,
und dass das Verschieben der Führungs-Unteranordnung (9) den Übergang der bidirektionalen Anordnung aus einer ersten Stellung im selbstgeführten Modus mit seitlichem Versatz der Straßenachse (2) gemäß einer Fahrtrichtung des Fahrzeugs in eine zweite Stellung im selbstgeführten Modus mit seitlichem Versatz der Straßenachse (2) gemäß der entgegengesetzten Fahrtrichtung des Fahrzeugs ermöglicht, wobei eine Zentralstellung durchschritten wird.

2. Bidirektionale Führungsanordnung nach Anspruch 1, **dadurch gekennzeichnet, dass** die Zentralstellung, die von der Führungs-Unteranordnung (9) durchschritten wird, eine Neutralstellung ist, in der die Führungsrollen (14) aus ihrer Zwangsführung auf der Führungsschiene (8) freigesetzt sind, wobei die Neutralstellung das Anheben der bidirektionalen Anordnung und das Führen in einem manuellen Modus erlaubt.

3. Bidirektionale Führungsanordnung nach Anspruch 1, **dadurch gekennzeichnet, dass** das Rahmen-Chassis (11) aus zwei Schenkeln (17, 18) gebildet ist, die über ihre Enden um eine parallel zur Längsachse des Fahrzeugs verlaufende Achse schwenkbar aneinander angelenkt sind.

4. Bidirektionale Führungsanordnung nach Anspruch 1 oder 2, **gekennzeichnet durch** einen für die Selbstführung wirkungslosen Zwischenzustand, der der Zentralstellung entspricht.

5. Bidirektionale Führungsanordnung nach dem vorangehenden Anspruch, **dadurch gekennzeichnet, dass** die Verbindungsteile, die den zentralen Achsblock (7) mit jedem der Enden des Rahmen-Chassis (11) verbinden, Schwenkarme (48, 49) sind, deren Schenkel schwenkbar einerseits um die Enden von Querstrukturen des zentralen Achsblocks (7) und andererseits um eine quer zu einem beweglichen Spreizstück der geführten Anordnung (10) verlaufende Achse angelenkt sind.

6. Bidirektionale Führungsanordnung nach Anspruch 4 oder 5, **dadurch gekennzeichnet, dass** jede der Schnittstellen-Verbindungen ein Gelenk ist, das ein bewegliches Spreizstück (33, 34) der geführten Unteranordnung (10) und eine in Längsrichtung des Fahrzeugs bewegliche Halteeinrichtung umfasst, die den oberen Teil jedes der Enden der Führungs-Unteranordnung (9) bildet.

7. Bidirektionale Führungsanordnung nach dem vorangehenden Anspruch, **dadurch gekennzeichnet, dass** jedes der Enden der Schenkel (17, 18) des Rahmen-Chassis (11) ein einzelnes einstückiges Teil bildet, das die drei Funktionen eines Rollenhalters, eines Gelenks zum Schwenken der Schenkel (17, 18) gegeneinander und einer beweglichen Halteeinrichtung zum Gleitführen eines jeden beweglichen Spreizstücks der geführten Unteranordnung (10) vereint.

8. Bidirektionale Führungsanordnung nach Anspruch 3 oder 4, **dadurch gekennzeichnet, dass** die unteren Enden jedes Schenkels (17, 18) des Rahmen-Chassis (11) als Scharnierstruktur ausgebildet sind, wobei sich die Scharnierstrukturen der beiden sich gegenüberliegenden Enden ineinander fügen, um eine Aufnahme für die Welle zum Verschwenken der Schenkel gegeneinander zu bilden.

9. Bidirektionale Führungsanordnung nach den Ansprüchen 7 und 8, **dadurch gekennzeichnet, dass** sich die Scharnierstruktur (19, 20) eines jeden Endes jedes Schenkels nach oben um eine Rollen-Halteeinrichtung verlängert, wobei die beiden einander gegenüberliegenden Halteeinrichtungen derart geneigt sind, dass sie ein V bilden, dessen Spitze nach unten zeigt.

10. Bidirektionale Führungsanordnung nach den Ansprüchen 6 bis 8, **dadurch gekennzeichnet, dass** die Halteeinrichtungen der oberen Abschnitte der Enden eines jeden Schenkels Deckplatten-Hälften (29 bis 32) mit hakenförmigem Ende sind, die nebeneinanderliegend angeordnet sind und die sich bei einer Bewegung aufeinander zu bzw. voneinander weg während der Schwenkbewegung der Schenkel des Rahmen-Chassis (11) nach unten oder nach oben relativ zueinander neigen können, wodurch ein Verschieben der Rollen gegeneinander ermöglicht ist.

11. Bidirektionale Führungsanordnung nach dem vorangehenden Anspruch, **dadurch gekennzeichnet, dass** zwei gleiche Deckplatten-Hälften mit hakenförmigem Ende nach ihrer seitlichen Annäherung Halte-Deckplatten (23, 24) bilden, die jeweils die Funktion einer in Längsrichtung beweglichen Halteeinrichtung für das zugehörige Endstück der geführten Unteranordnung (10) bilden.

12. Bidirektionale Führungsanordnung nach Anspruch 11, **dadurch gekennzeichnet, dass** die Halte-Deckplatten (23, 24) aufgrund der seitlich benachbarten Anordnung ihrer entsprechenden Deckplatten-Hälften (29 bis 32) eine bewegliche Halteeinrichtung mit einem zentralen Langloch bilden, das einen birnenförmigen Querschnitt aufweist und das durch die Abfolge einer großen und einer kleinen Öffnung gebildet wird, die voneinander durch eine Eintrittszone getrennt sind, zu der die Ränder der großen Öffnung hin konvergieren.

13. Bidirektionale Führungsanordnung nach Anspruch 6 oder 11 oder 12, **dadurch gekennzeichnet, dass** jedes bewegliche Spreizstück (33, 34) der geführten Unteranordnung (10) aus einem zentralen zylinderförmigen Teil gebildet ist, das durch zwei endständige Flanschen (43, 44) begrenzt ist, das als Spreizer der beiden Deckplatten-Hälften (29 bis 32) sowie als Achsschenkelbolzen für die selbstlenkende Führung fungiert, während es sich in der kleinen Öffnung des Langlochs befinden, und das den seitlichen Versatz ermöglicht, während es sich in der großen Öffnung befindet, und dass der äußere Durchmesser des zentralen zylinderförmigen Teils (42) der beweglichen Spreizstücke oder Spreizer größer als die Breite der kleinen Öffnung ist.

14. Bidirektionale Führungsanordnung nach Anspruch 1, **dadurch gekennzeichnet, dass** der zentrale Achsblock (7) ein doppeltes Armkreuz (45) ist, das zwei durch einen zentralen Vorsprung (6) voneinander getrennte Querstrukturen und einen Lenker (16) zur selbstgeführten Steuerung aufweist.

15. Bidirektionale Führungsanordnung nach Anspruch 1, **dadurch gekennzeichnet, dass** die Führungs-Unteranordnung (9) anhebbar ist.

16. Bidirektionale Führungsanordnung nach dem vorangehenden Anspruch, **dadurch gekennzeichnet, dass** die Führungs-Unteranordnung (9) mittels eines Anhebemechanismus anhebbar ist, der mit dem zentralen Achsblock (7) verbunden ist und eine Anordnung mit zwei schwenkbaren Anhebearmen aufweist, die durch eine zentrale Motoreinrichtung betätigbar sind.

17. Bidirektionale Führungsanordnung nach Anspruch 1, **dadurch gekennzeichnet, dass** eine Federkraft eine dauerhafte, nach unten gerichtete Last auf die Führungsrollen gewährleistet.

18. Bidirektionale Führungsanordnung nach dem vorangehenden Anspruch, **dadurch gekennzeichnet, dass** das Mittel, durch das die nach unten gerichtete, rückstellende Federkraft erzeugt wird, ein flexibles, quer angeordnetes Blatt (65) ist, dessen Enden auf den Schenkeln (17, 18) des Rahmen-Chassis (11) aufliegen.

19. Bidirektionale Führungsanordnung nach Anspruch 17, **dadurch gekennzeichnet, dass** das Mittel zum Erzeugen der rückstellenden Federkraft ein längs angeordnetes, flexibles Blatt (67) ist, das sich mit seinen Enden (68, 69) auf den oberen Flanschen der Spreizstücke (33, 34) abstützt.

20. Bidirektionale Führungsanordnung nach Anspruch 1 oder 3, **dadurch gekennzeichnet, dass** das Rahmen-Chassis ein steifer Rahmen mit feststehenden Schenkeln (17, 18) ist.

## Claims

1. Bidirectional assembly for guiding along a guide rail (8) and limiting lateral movement for a vehicle axle (2) comprising two pairs of two guide wheels (14) angled at a V arid placed on either side of the vehicle axle (2) and engaged along the same guide rail (8), **characterized in that** it consists of the following functional modules :
• a guided sub-assembly (10) formed of a central axle block (7) attached to the vehicle axle (2) and steering this vehicle axle (2) or its directional wheels to automatically guide them along a guide rail (8), and which is capable of shifting transversely to the rear around a pivot point located near the front wheels;
• a guiding sub-assembly (9) formed of a chassis-frame structure (11) comprising two opposite extremities extending on either side of the axle, each equipped with a pair of guide wheels (14) engaging the guide rail (8), said guiding sub-assembly (9) being longitudinally displaceable relative to the guided assembly (10) between two end positions located on either side of the vehicle axle (2);
• a dual interface connection joining each of the extremities of the chassis-frame (11) to each of the extremities of the guided sub-assembly (10) in such a way that they are longitudinally displaceable relative to the vehicle by means of a complex joint which allows, due to the displacement of the chassis-frame (11) along the vehicle i.e. transversaly to the vehicle-axle (2) to be alternatively a pivot joint or a transverse angle travel joint in order to assure the autoguidance function;
and **in that** displacing the guiding sub-assembly (9) allows the bidirectional assembly to change from a first position in autoguided mode with lateral clearance for the vehicle axle (2) in one direction of running of the vehicle, into a second position in autoguide mode with lateral clearance for the vehicle axle (2) in the opposite direction of vehicle, passing through a central position.

2. A bidirectional guide assembly according to claim 1 **characterized in that** the central position through which the guiding sub-assembly (9) passes is a neutral position in which the guide wheels (14) are disengaged from the guide rail (8), said neutral position allowing the bidirectional assembly to be raised and guiding to take place in manual mode.

3. A bidirectional guide assembly according to claim 1 **characterized in that** the chassis-frame (11) is formed of two branches (17, 18) pivotably articulated to each other at their extremities around an axle parallel to the longitudinal vehicle axle.

4. A bidirectional guide assembly according to claim 1 or claim 2 characterized through the inoperative automatic guide state corresponding to the central position.

5. A bidirectional guide assembly according to the preceding claim **characterized in that** the connecting elements joining the central axle block (7) to each extremity of the chassis-frame (11) are pivoting arms (48, 49) with their branches pivotably articulated first, around the extremities of the transverse structures of the central axle block (7) and second, around an axle transverse to a movable separation element on the guided assembly (10).

6. A bidirectional guide assembly according to claim 4 or claim 5 **characterized in that** each of the interface connections is an articulation incorporating a movable separating element (33, 34) on the guided sub-assembly (10) and a support that is longitudinally movable relative to the vehicle and which constitutes the upper portion of each extremity of guiding sub-assembly (9).

7. A bidirectional guide assembly according to the preceding claim **characterized in that** each extremity of the branches (17, 18) of the chassis-frame (11) forms a single, monoblock element incorporating the three functions of guide wheel support, pivoting articulation between the branches (17, 18), and movable sliding/guiding support for each movable separation piece on guided sub-assembly (10).

8. A bidirectional guide assembly according to claim 3 or claim 4 **characterized in that** the lower extremities of each branch (17, 18) of the chassis-frame (11) are shaped like hinges (19, 20), and the hinge structures with two facing extremities overlap each other so as to form a housing for the pivot axle branches in the space between the hinges.

9. A bidirectional guide assembly according to claims 7 and 8 **characterized in that** the hinge structure (19, 20) on each end of each branch extends upward into a guide wheel support, with the two opposing supports being angled to form a downward pointing V.

10. A bidirectional guide assembly according to claims 6 through 8 **characterized in that** the supports for the upper portions of the ends of each branch are half-plates (29 through 32) with hooked ends that are positioned side-by-side and can be angled closer together or farther apart from each other during the upward or downward pivoting motion of the branches of the chassis-frame (11), thereby allowing displacement of the guide wheels in relation to each other.

11. A bidirectional guide assembly according to the preceding claim **characterized in that** after being laterally positioned together, two similar half-plates with hooked ends form support plates (23, 24) which each fulfill the function of longitudinally movable supporting the corresponding end piece of the guided sub-assembly (10).

12. A bidirectional guide assembly according to claim 11 **characterized in that** the plate-supports (23, 24), by virtue of the side-by-side arrangement of their respective half-plates (29 through 32), constitute a movable support with a pear-shaped central light formed by a succession of large and small openings separated by an entry zone toward which the edges of the large opening converge.

13. A bidirectional guide assembly according to claim 6 or 11 or 12 **characterized in that** each movable separation element (33, 34) of the guided sub-assembly (10) is formed of a cylindrical central portion (42) terminating in two end flanges (43, 44) and plays the role of separating the two half-plates (29 through 32) as well as acting as a pivot-axle for autodirectional guidance when the half-plates are located in the small opening in the light, and allowing lateral clearance when they are in the large opening, and **in that** the exterior diameter of the cylindrical central portion (42) of the movable separation elements or separators s larger than the width of the small opening.

14. A bidirectional guide assembly according to claim 1 **characterized in that** the central axle block (7) is shaped like a double cross (45) with two transverse structures separated by a central block (6) providing an interface with the vehicle axle (2) and an autoguide directional rod (16).

15. A bidirectional guide assembly according to claim 1 **characterized in that** the guide sub-assembly (9) can be raised.

16. A bidirectional guide assembly according to the preceding claim **characterized in that** the guide sub-assembly (9) can be raised with a lifting mechanism integral with the central axle block (7) comprising an assembly with two pivoting lifting arms activated by a central drive means.

17. A bidirectional guide assembly according to claim 1 **characterized in that** an elastic force exerts permanent downward pressure against the guide wheels.

18. A bidirectional guide assembly according to the preceding claim **characterized in that** the means for procuring the downward elastic force is a flexible transverse plate (65) with its extremities contacting the branches (17, 18) of the chassis-frame (11).

19. A bidirectional guide assembly according to claim 17 **characterized in that** the means for procuring the downward elastic force is a flexible longitudinal plate (67) with extremities (68, 69) which contact the upper flanges of the separation elements (33, 34).

20. A bidirectional guide assembly according to claim 1 or claim 3 **characterized in that** the chassis-frame is a rigid frame with fixed branches (17, 18).
